# EUROPEAN PATENT APPLICATION

(11) **EP 4 769 704 A1**
(43) Date of publication of application: **01.07.2026**
(21) Application number: 25227303.2
(22) Date of filing: 26.12.2025
(51) Int. Cl.: H01M 50/204, H01M 50/244, H01M 50/258, H01M 50/289, H01M 50/35, H01M 50/507, H01M 50/213, H01M 50/284

(54) **BATTERY AND METHOD FOR MANUFACTURING THE SAME**

(30) Priority: 27.12.2024 CN 202411957439; 20.02.2025 WO PCT/CN2025/078169
(71) Applicant: Eve Energy Co., Ltd., Huizhou, Guangdong 516006 (CN)
(72) Inventor: Xianyu, LIANG, Huizhou, 516006 (CN); Xueqing, WEI, Huizhou, 516006 (CN); Junwei, YAO, Huizhou, 516006 (CN); Zheng, LIN, Huizhou, 516006 (CN); Yingjie, PENG, Huizhou, 516006 (CN); Pingping, LIU, Huizhou, 516006 (CN)
(74) Representative: Zhu, Puxing

(57) **Abstract**

A battery and a method for manufacturing the same are provided. The battery includes battery cell(s) (1) each provided with a first pole and a second pole, busbars including first busbar(s) (2) and second busbar(s) (3), and a case (4) including a housing (41) and a first case cover (42). The housing includes a body (411) and a partition plate (412) both defining a first cavity arranging with battery cell(s). One end of the battery cell abuts against the partition plate. The first case cover is provided at an end of the housing. Support portion(s) (421) are provided on a side of the first case cover. The first busbar is connected to the first pole. The support portion abuts against the first busbar. The partition plate is provided with pole hole(s) each enabling passage of the second pole to connect the second busbar. The second busbar is on a side of the partition plate away from the battery cell.

## Description

### Technical Field

The present invention relates to the technical field of batteries, and particularly, to a battery and a method for manufacturing the same.

### Background

Low-voltages (e.g., 12V) battery packs are often designed to be simple and highly integrated due to cost considerations, spatial constraints, and their less demanding usage scenarios compared to traction batteries.

### Summary

However, it is difficult to apply a dual-path battery cell (for example, a large cylindrical dual-path battery cell) having poles and explosion-proof valves at two ends to a low-voltage battery pack. In particular, it is difficult to weld the battery cells to a Cells Contact System (referred briefly to as CCS, which is composed of a flexible circuit board, a plastic structural member, a copper-aluminum busbar, and the like), after the battery cells are installed in a battery case.

The present invention provides a battery including: one or more battery cells, wherein two opposite ends of each of the one or more battery cells are provided with a first pole and a second pole, respectively; busbars including one or more first busbars and one or more second busbars; and a case including a housing and a first case cover. The housing includes a body and a partition plate fixedly arranged. The partition plate is located in the body. The partition plate and the body define a first cavity with an opening at an end of the first cavity, and the one or more battery cells are arranged in the first cavity, and one of the two opposite ends of the battery cell abuts against the partition plate. The first case cover is provided at an end of the housing to close the first cavity. One or more support portions are provided on a side of the first case cover facing towards the one or more battery cells. The first busbar is connected to the first pole, and the support portion abuts against the first busbar. The partition plate is provided with one or more pole holes. The second busbar is located on a side of the partition plate facing away from the battery cell. The second pole passes through the pole hole and is connected to the second busbar.

The present invention further provides a method for manufacturing a battery including: providing one or more battery cells, wherein two opposite ends of each of the one or more battery cells are provided with a first pole and a second pole, respectively; providing a housing, wherein the housing comprises a body and a partition plate fixedly arranged, the partition plate is located in the body, the partition plate and the body define a first cavity with an opening at an end of the first cavity, and one or more pole holes are formed in the partition plate; disposing the one or more battery cells in the first cavity, and penetrating the second pole into the pole hole, wherein one of the two opposite ends of the battery cell abuts against the partition plate; providing one or more first busbars, and connecting the busbar to the first pole; providing a first case cover, wherein one or more support portions are provided on a surface of the first case cover; providing the first case cover at an end of the housing to close the first cavity, wherein the support portion abuts against the first busbar; and providing one or more second busbars, fixing the one or more second busbars to a side of the partition plate facing away from the first cavity, and connecting the second busbar to the second pole.

### Advantages of the Application

According to the battery provided in the present invention, by abutting one end of each battery cell against a partition plate, first busbar(s) and first pole(s) can be first connected. In this way, a supporting force is supplied to the battery cell(s) through the partition plate, so that the first busbar(s) are abutted against the first pole(s) of the battery cell(s), thereby facilitating connection. Then, support portion(s) of a first case cover is abutted against the first busbar(s), and second pole(s) are connected to second busbar(s). Thus, a supporting force is supplied to the battery cell(s) through the support portion(s) of the first case cover, so that the second busbar(s) are abutted against the second pole(s) of the battery cell(s), thereby facilitating welding therebetween. At the same time, the force on the first busbar(s) which have been welded can be reduced, and the fracture probability of welding point(s) of the first busbar(s) can be reduced.

### Brief Description of the Drawings

FIG. 1 is an exploded schematic view of a battery at a first viewing angle according to embodiments of the present invention.
FIG. 2 is a exploded schematic view of a battery at a second viewing angle according to embodiments of the present invention (a first sealant layer and a second sealant layer are not shown).
FIG. 3 is a schematic structural view of a case according to embodiments of the present invention (a first case cover and a second case cover are not shown).

Reference signs: battery cell-1; first explosion-proof valve-12; first busbar-2; second busbar-3; case-4; housing-41; body-411; first limiting portion-4111; partition plate-412; pole holes-4121; second cavity-413; first case cover-42; support portion-421; second accommodation chamber-422; first projection-423; second case cover-43; second projection-431; separator-44; first accommodation chamber-441; first channel-45; second channel-46; second explosion-proof valve-47; BMS module-5; first sealant layer-6; and second sealant layer-7.

### Detailed Description of the Embodiments

In the description of the present invention, unless otherwise expressly defined and defined, the terms "connected", "connection", "fixed" are to be understood in a broad sense, for example, which may be interpreted as a fixed connection, as a detachable connection, or as a whole; may be interpreted as a mechanical connection or an electrical connection; may be interpreted as a direct connection or indirect connection by means of an intermediate medium; or may be interpreted as an internal communication of the two elements or interaction of the two elements. The specific meaning of the above terms in the present invention can be understood in a specific way to those of ordinary skill in the art.

For the purposes of this application, unless otherwise expressly specified and limited, that the first feature is "over" or "under" the second feature may include the first feature is in direct contact with the second feature, or may include the first feature is not in direct contact with the second feature, but by means of a separate feature therebetween. Furthermore, that the first feature is "on", "above" and "over" the second feature includes the first feature is directly above and diagonally above the second feature, or simply indicating that the first feature is horizontally higher than the second feature. That the first feature is "below", "under", and "beneath" the second feature includes the first feature is directly below and diagonally below the second feature, or simply indicating that the first feature is horizontally smaller than the second feature.

In the description of this embodiment, the terms "upper", "lower", "left", "right", "front", "back", and other orientation or positional relationships are based on the orientation or positional relationship shown in the accompanying drawings, and are only for convenience of description and simplified operation. It is not intended to indicate or imply that the device or the element referred to must have a specific orientation, be constructed and operated in a specific orientation, and therefore should not be construed as a limitation on the present invention. In addition, the terms "first" and "second" are only used for descriptive purposes and have no special meaning.

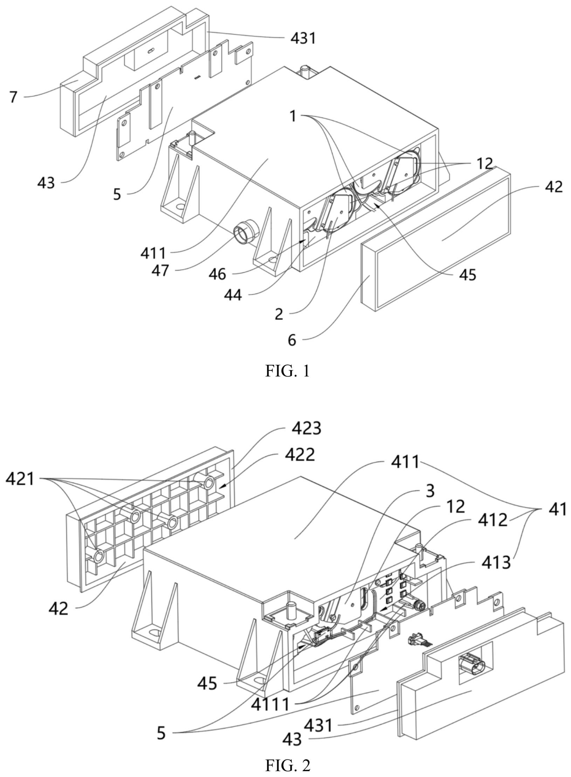

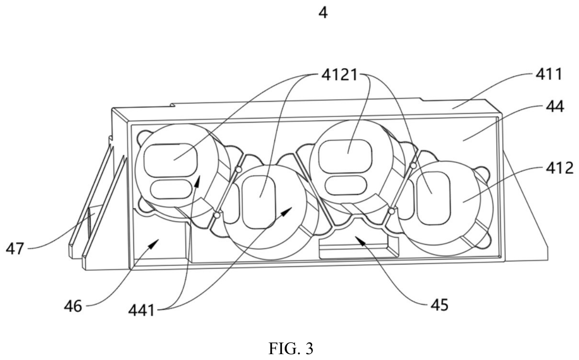

In a first aspect, referring to FIGS. 1-3, embodiments of the present invention provide a battery including:
battery cell(s) 1, two opposite ends of each of which are respectively provided with a first pole and a second pole;
a busbar including first busbar(s) 2 and second busbar(s) 3;
a case 4 including a housing 41 and a first case cover 42; in which the housing 41 includes a body 411 and a partition plate 412; the partition plate 412 is located in the body 411, and the partition plate 412 and the body 411 define a first cavity with an opening at one end of the first cavity; the battery cell(s) 1 are disposed in the first cavity, and one of the two opposite ends of the battery cell 1 is in abutment with the partition plate 412; the first case cover 42 is provided at an end of the housing 41 to close the first cavity; the first case cover 42 is provided with support portion(s) 421 on a surface of the first case cover 42 facing the battery cell 1, the first busbar 2 is connected to the first pole, and the support portion 421 abuts against the first busbar 2; the partition plate 412 is provided with pole hole(s) 4121, the second busbar 3 is located on a side of the partition plate 412 facing away from the battery cell 1, and the second pole passes through the pole hole 4121 and is connected to the second busbar 3.

It will be appreciated that when the busbar is welded to the pole, the busbar is necessary to be compressed by a welding device to ensure that the busbar is attached to the pole. After the battery cell(s) 1 are placed in the first cavity, the first busbar(s) 2 and the first pole(s) may be welded to each other by the welding device. In this case, end(s) of the battery cell(s) 1 are located at the bottom of the cavity abut against the partition plate 412, so that the partition plate 412 can provide the supporting force to the battery cell(s) 1, and the welding device can compress and attach the first busbar(s) 2 and the first pole(s), thereby facilitating the welding of the first busbar(s) and the first pole(s). After each first busbar 2 is connected to the corresponding first pole, the second pole(s) are welded to the second busbar(s) 3 by the welding device. At this time, the support portion(s) 421 of the first case cover 42 abut against the first busbar(s) 2, so that the support portion(s) 421 can provide the supporting force to the battery cell(s) 1, and the welding device can press and attach the second busbar(s) 3 and the second pole(s), thereby facilitating the welding of the second busbar(s) and the second pole(s). At this time, the support portion(s) 421 can bear the pressing force of the welding device, thereby reducing the probability of breakage of the welding spot(s) of the first busbar(s) 2.

It will be appreciated that the partition plate 412 is provided with pole hole(s) 4121 through which the second pole(s) passes. The second busbar 3 is located on a side of the partition plate 412 facing away from the battery cell 1, so that the second busbar 3 and the second pole can be welded outside the first cavity after the battery cell 1 is placed in the first cavity, thereby facilitating the welding operation of the second busbar and the second pole. At the same time, when the battery cell(s) 1 abut against the partition plate 412, the second pole(s) pass through the pole hole(s) 4121, so that the end faces of the battery cell(s) 1 can be more closely fitted with the partition plate 412, thereby increasing the supporting force of the partition plate 412 to the battery cell(s) 1.

By way of example, the battery of the present invention may include a plurality of battery cells 1. The battery is a battery pack. The plurality of battery cells 1 may be arranged in an S-shaped arrangement in the first cavity, so that the size of the battery pack in the arrangement direction of the battery cells 1 can be reduced. The plurality of battery cells 1 may be arranged in a linear arrangement in the first cavity, so that the size of the battery pack perpendicular to the arrangement direction of the battery cells 1 can be reduced, and the size of the battery pack can be adjusted by adjusting the arrangement manner of the battery cells. The partition plate 412 is of a plate-like structure in the body 411. The partition plate 412 can be arranged perpendicularly to the axial direction of the body 411. The shape of the partition plate 412 can be matched to the shape of the inner surface of the body 411. One of the first pole and the second pole is a positive pole, and the other of the first pole and the second pole is a negative pole. The housing 41 may be formed through an integrated molding process of incorporating the body 411 and the partition plate 412. The body 411 may have a square shape, a circular shape, or other irregular shape. The support portion 421 abuts against the first busbar 2 so that the support force can be applied to the first busbar 2, and thus the support portion 421 can provide the supporting force to the battery cell 1. The support portion 421 may be of any shape, provided that the supporting force can be applied to the first busbar 2.

In one embodiment, the partition plate 412 and the body 411 further define a second cavity 413 having an open end of the second cavity. The second cavity 413 is independent of the first cavity. The case 4 further includes a second case cover 43 provided at the other end of the housing 41 to close the second cavity 413. The second busbar 3 is located in the second cavity 413.

It will be appreciated that the partition plate 412 is located within the body 411 so that the space within the body 411 can be divided into a first cavity for receiving the battery cell(s) 1 and a second cavity 413 for receiving other components of the battery pack, such as the (referred briefly to as BMS) module 5. The second busbar 3 is also disposed within the second cavity 413 so that the second busbar 3 and the second pole can be welded through the second cavity 413. The second case cover 43 may close the second cavity 413 after the second busbar 3 is welded to the second pole, so that the elements in the second cavity 413 are closed within the second cavity 413.

In one embodiment, the case 4 further includes a separator 44 filled in the first cavity. The separator 44 is provided with first accommodation chamber(s) 441 therethrough. The battery cell 1 is accommodated in the first accommodation chamber 441 and compatible with the first accommodation chamber 441.

It will be appreciated that the shape of the separator 44 may be matched to the shape of the inner surface of the first cavity so that the separator 44 may be secured within the first cavity. The separator 44 and the body 411 can be manufactured in an integrated manner, so that the separator 44 can be more stable inside the body 411 and can be easily manufactured. The partition plate 412 may abut against the separator 44 so that the first pole passes through the pole hole 4121 in the partition plate 412, thereby facilitating connection of the first pole to the second busbar 3. The partition plate 412, the separator 44, and the body 411 can be manufactured in an integrated manner, thereby improving the stability of the battery pack and facilitating manufacturing.

In one embodiment, a shape of the first case cover 42 is cap-shaped, and the first case cover 42 is provided with a second accommodation chamber 422 communicating with the first accommodation chamber 441.

It will be appreciated that when the first case cover 42 is in the form of a cap, the cavity with the cap-shaped structure is the second receiving cavity 422, and the support portion 421 is located within the second receiving cavity 422. The second accommodation chamber 422 communicates with the first accommodation chamber 441 so that the support portion 421 in the second accommodation chamber 422 can provide a supporting force when the second busbar 3 is connected to the second pole.

In one embodiment, first explosion-proof valves 12 are further provided at two opposite ends of the battery cell 1. The two first explosion-proof valves 12 communicate with the second cavity 413 and the second accommodation chamber 422, respectively. The case 4 is further provided with a first channel 45 penetrating through the separator 44 and the partition plate 412. The first channel 45 is independent of the first accommodation chamber 441. The second cavity 413 and the second accommodation chamber 422 communicate with each other through the first channel 45. The case 4 is further provided with a second explosion-proof valve 47 communicating with the second accommodation chamber 422.

It will be appreciated that first explosion-proof valves 12 are provided at two opposite ends of the battery cell 1 (such as a large cylindrical dual-path battery cell). The two first explosion-proof valves 12 communicate with the second cavity 413 and the second accommodation chamber 422, respectively. When the thermal runaway occurs in the battery cell 1, the first explosion-proof valves 12 at two ends of the battery cell 1 may exhaust gas, and the gas can enter into the second cavity 413 and the second accommodation chamber 422, respectively. A through-hole may be formed in the partition plate 412. The first explosion-proof valve 12 at an end of the battery cell 1 may be disposed in the through-hole so that the first explosion-proof valve 12 at the end of the battery cell 1 may communicate with the second cavity 413. The first channel 45 passes through the separator 44 and the partition plate 412, so that the second cavity 413 communicates with the second accommodation chamber 422 through the first channel 45. The second explosion-proof valve 47 is disposed on the case 4, and in particular may be located on the first case cover 42. When the thermal runaway of the battery cell 1 occurs, the gas discharged from the first explosion-proof valve 12 in the second cavity 413 may be discharged outside the battery pack through the second cavity 413, the first channel 45, the second accommodation chamber 422, and the second explosion-proof valve 47 in sequence. Further, the gas discharged from the first explosion-proof valve 12 in the second accommodation chamber 422 may be discharged to the outside of the battery pack through the second accommodation chamber 422 and the second explosion-proof valve 47 in sequence. It is also possible that the second explosion-proof valve 47 is located on the second case cover 43. When the thermal runaway of the battery cell 1 occurs, the gas discharged from the first explosion-proof valve 12 in the second cavity 413 can be discharged to the outside of the battery pack via the second cavity 413 and the second explosion-proof valve 47 in sequence. The gas discharged from the first explosion-proof valve 12 in the second accommodation chamber 422 can be discharged to the outside of the battery pack via the second accommodation chamber 422, the first channel 45, the second cavity 413 and the second explosion-proof valve 47 in sequence. The second explosion-proof valve 47 may be located on the body 411. Thus, the first channel 45 may be provided on the edges of both the separator 44 and the partition plate 412, so that the housing 41 is located beside the first channel 45, and the second explosion-proof valve 47 communicates with the second cavity 413 and the second accommodation chamber 422. When the thermal runaway of the battery cell 1 occurs, the gas discharged from the first explosion-proof valve 12 in the second cavity 413 may be discharged to the outside of the battery pack via the second cavity 413, the first channel 45, and the second explosion-proof valve 47 in sequence. Further, the gas discharged from the first explosion-proof valve 12 in the second accommodation chamber 422 may be discharged to the outside of the battery pack via the second accommodation chamber 422, the first channel 45, and the second explosion-proof valve 47 in sequence. In this way, the gas discharged from the first explosion-proof valves 12 at both ends of the battery cell 1 can be effectively discharged to the outside of the battery pack when the thermal runaway of the battery cell 1 occurs.

In one embodiment, the housing 4 is further provided with a second channel 46. The second channel 46 includes a first sub-section penetrating through the side wall of the body 411, and a second sub-section disposed in the separator 44. The first sub-section communicates with the second sub-section. The second channel 46 is independent of the first accommodation chamber 441 and the first channel 45. The second sub-section communicates with the second accommodation chamber 422 and the outside of the battery pack. Alternatively, the second sub-section communicates with the second cavity and the outside of the battery pack. The second explosion-proof valve 47 is disposed on the body 411, and the second explosion-proof valve 47 communicates with the first sub-section.

It will be appreciated that the position of the second channel 46 may be provided as desired. The second channel 46 may be located in a middle of the battery pack. An extension direction of the second channel 46 may be parallel to an axial direction of the battery cell 1. Thus, the exhaust velocity is enhanced, and the arrangement of the battery cells 1 are facilitated.

It will be appreciated that the second explosion-proof valve 47 is disposed on the body 411 and communicates with the first sub-section. The second explosion-proof 47 may be disposed within the first sub-section. The second accommodation chamber 422 communicates with the outside through the second sub-section. When the thermal runaway occurs in the battery cell 1, the gas discharged from the first explosion-proof valve 12 in the second cavity 413 can be discharged to the outside of the battery pack through the second cavity 413, the first channel 45, the second accommodation chamber 422, the second sub-section, and the second explosion-proof valve 47 in sequence. The gas discharged from the first explosion-proof valve 12 in the second accommodation chamber 422 can be discharged to the outside of the battery pack through the second accommodation chamber 422, the second sub-section, and the second explosion-proof valve 47 in sequence. The second cavity 413 is communicated with the outside through the second sub-section. When thermal runaway occurs in the battery cell 1, the gas discharged from the first explosion-proof valve 12 in the second cavity 413 can be discharged to the outside of the battery pack through the second cavity 413, the second sub-section, and the second explosion-proof valve 47 in sequence. Further, the gas discharged from the first explosion-proof valve 12 in the second accommodation chamber 422 can be discharged to the outside of the battery pack through the second accommodation chamber 422, the first channel 45, the second cavity 413, the second sub-section, and the second explosion-proof valve 47 in sequence. As such, the second explosion-proof valve 47 may be located on the body 411, and the first channel 45 may also be located in the middle of the battery pack. By communicating the second sub-section with the second accommodation chamber 422 and the outside, the influence of the gas discharged from the first explosion-proof valve 12 on the elements in the first cavity can be reduced.

In one embodiment, the first busbar 2 is connected to the first pole, and the support 421 abuts against the junction of the first busbar 2 and the first pole.

It will be appreciated that the first busbar 2 and the first pole may be joined by welding. The support portion 421 abuts against the junction of the first busbar 2 and the first pole. Thus, a supporting force is provided to the junction, thereby reducing the probability of breakage at the junction due to bearing the force. The welding point of the first busbar 2 and the first pole is mostly circular, and the support portion 421 may be cylindrical in shape to match the welding point.

In one embodiment, the second busbar 3 is integrally disposed on the partition plate 412.

It will be appreciated that the second busbar 3 may be secured to the partition plate 412 by heat riveting, thereby facilitating welding of the second busbar 3 to the second pole.

In one embodiment, the first busbar 2 is welded to the first pole.

In one embodiment, the second busbar 3 is welded to the second pole.

In one embodiment, the battery further comprises a BMS module 5 disposed in the second cavity 413 and electrically connected to the battery cell(s) 1.

It will be appreciated that the BMS module 5 includes a BMS. The BMS intelligently manages and maintains each battery cell 1, thereby preventing overcharge and overdischarge of the battery cell 1, prolonging the service life of the battery cell 1, and monitoring the state of the battery cell 1. The BMS module 5 includes a control module, an acquisition wire harness for acquiring data of the battery cell 1, an NTC thermistor, a connector for connecting the acquisition wire harness to the control module, and the like. The BMS module 5 is disposed in the second cavity 413, so that the BMS module 5 can be separated from the battery cell 1, thereby facilitating installation of the battery cell 1. The acquisition harness, the NTC thermistor, and the connector for connecting the acquisition harness to the control module may be integrated on the partition plate 412, thereby reducing the number of mounting brackets, material use, and steps of assembling the battery.

In one embodiment, the first case cover 42 extends into the first cavity, and a first sealant layer 6 is provided between the first case cover 42 and the body 411.

It will be appreciated that there is the first sealant layer 6 between the first case cover 42 and the body 411, which allows for a seal between the first case cover 42 and the body 411.

In one embodiment, the second case cover 43 extends into the second cavity 413, and a second sealant layer 7 is provided between the second case cover 43 and the body 411.

It will be appreciated that by providing the second sealant layer 7 between the second case cover 43 and the body 411, a seal between the second case cover 43 and the body 411 can be achieved.

In one embodiment, a shape of the first case cover 42 is cap-shaped, the edge of the first case cover 42 is provided with a first projection 423 extending towards the body 411. The body 411, the first case cover 42 and the first projection 423 define a first accommodation groove in which the first sealant layer 6 is located.

It will be appreciated that a first projection 423 extending toward the body 411 is provided at the edge of the cap-shaped first case cover 42. In this way, after the first case cover 42 extends into the body 411, the first accommodation groove is formed between the first projection 423 and the body 411, so as to receive the first sealant layer 6, thereby reducing the probability of the sealant leaking into the body 411 from between the edge of the first case cover 42 and the body 411. Thus, the sealant can fill the first accommodation groove, thereby improving the sealability between the first case cover 42 and the body 411. One side of the first projection 423 toward the body 411 is in clearance fit with the body 411.

In one embodiment, a shape of the second case cover 43 is cap-shaped, the edge of the second case cover 43 is provided with a second projection 431 extending towards the body 411. The body 411, the second case cover 43 and the second projection 431 define a second accommodation groove in which the second sealant layer 7 is located.

It will be appreciated that the second projection 431 extending toward the body 411 is provided at the edge of the cap-shaped second case cover 43. After the second case cover 43 extends into the body 411, the second accommodation groove is formed between the second projection 431 and the body 411 for accommodation the second sealant layer 7, thereby reducing the probability of the sealant leaking into the body 411 from between the edge of the second case cover 43 and the body 411. In this way, the sealant can fill the second accommodation groove, thereby improving the sealability between the second case cover 43 and the body 411. One side of the second projection 431 toward the body 411 is in clearance fit with the body 411.

In one embodiment, the body 411 is further provided with first limiting portion(s) 4111 located in the second cavity 413, and the second case cover 43 abuts against the first limiting portion(s) 4111.

It will be appreciated that by providing the first limiting portion(s) 4111 in the second cavity 413 and bringing the first limiting portion(s) 4111 into abutment with the second case cover 43, the position of the second case cover 43 can be limited when the second case cover 43 is placed in the second cavity 413, thereby preventing the second case cover 43 from squeezing the elements in the second cavity 413 and facilitating the installation of the second case cover 43. The first limiting portion 4111 may be provided at the edge of the second cavity 413 so as to abut against the second projection 431 of the second case cover 43. The number of the first limiting portions 4111 may be multiple. The first limiting portions 4111 may be equally distributed around the second cavity 413, so as to better limit the depth of the second case cover 43 extending into the second cavity 413.

In one embodiment, the edge of the first case cover 42 abuts against the separator 44.

It will be appreciated that by abutting the edge of the first case cover 42 against the separator 44, the position of the first case cover 42 can be restricted when the first case cover 42 is placed in the body 411, thereby facilitating the installation of the first case cover 42. The shape of the first case cover 42 is cap-shaped, and the edge of the second case cover 42 is provided with the second projection 431 extending toward the body 411, so that the second projection 431 can be abutted against the separator 44, thereby better limiting the depth of the second case cover 43 extending into the second cavity 413.

In a second aspect, an embodiment of the present invention provides a method for manufacturing a battery, including following steps of:
providing battery cell(s) 1, in which two opposite ends of the battery cell are provided with a first pole and a second pole, respectively;
providing a housing 41, in which the housing 41 includes a body 411 and a partition plate 412, the partition plate 412 is located in the body 411, the partition plate and the body define a first cavity with an opening at one end of the first cavity, the partition plate 412 is provided with pole hole(s) 4121; disposing the battery cell 1 in the first cavity, and penetrating the second pole through the pole hole 4121, in which one end of the battery cell 1 abuts against the partition plate 412;
providing first busbar(s) 2, and connecting the first busbar(s) 2 to the first pole(s);
providing a first case cover 42, in which support portion(s) 421 are provided on a surface of the first case cover 42; providing the first case cover 42 at an end of the housing 41 to close the first cavity, in which the support portion 421 abuts against the first busbar 2; and
providing second busbar(s) 3, fixing the second busbar(s) 3 to a side of the partition plate 412 facing away from the first cavity, and connecting the second busbar to the second pole.

It will be appreciated that during the battery is manufactured, the battery cell(s) 1 are first put into the first cavity, and the separator 44 is provided in the first cavity, the battery cell(s) 1 are put into the first accommodation chamber(s) 441 in the separator 44, the second pole(s) are passed through the pole hole(s) 4121 provided in the partition plate 412, and one end of each battery cell 1 close to the partition plate 412 abuts against the partition plate 412. At this time, the first busbar 2 is welded to the first pole by the welding device, and the pressing force of the welding device is borne by the partition plate 412. Next, the first case cover 42 is placed in the body 411, and the first case cover 42 and the body 411 are connected by a sealant. At this time, the support portion 421 on the first case cover 42 abuts against the first busbar 2. Then, the second busbar 3 and the second pole are welded by the welding device, and the pressing force of the welding device is borne by the first case cover 42. In order to make the battery cell 1 more stable in the first accommodation chamber 441, a structural adhesive may be provided in the battery cell 1 and the first accommodation chamber 441 after the battery cell 1 enters into the case.

In one embodiment, the partition plate 412 and the body 411 further define a second cavity 413 having an opening at an end of the second cavity. The second cavity 413 is independent of the first cavity. The method for manufacturing the battery further includes:
providing a second case cover 43 and a BMS module 5;
disposing a BMS module 5 in the second cavity 413, and connecting the BMS module to the battery cell(s) 1;
arranging the second case cover 43 at an other end of the housing 41 to close the second cavity 413.

It will be appreciated that the BMS module 5 includes a control module, an acquisition wire harness for acquiring data of the battery cell 1, an NTC thermistor, a connector for connecting the acquisition wire harness and the control module, and the like. The acquisition wire harness for acquiring data of the battery cell 1, the NTC thermistor, and the connector for connecting the acquisition wire harness and the control module may be integrated on the partition plate 412 before the battery cell(s) 1 is placed in the case 4. Or, the acquisition wire harness for acquiring data of the battery cell 1, the NTC thermistor, and the connector for connecting the acquisition wire harness and the control module may may be integrated on the partition plate 412 after the second busbar(s) 3 are connected to the second pole(s). The control module may be placed into the second cavity 413 after the second busbar(s) 3 are connected to the second pole(s), thereby facilitating the connection of the second busbar(s) 3 to the second pole(s). Finally, the second case cover 43 is connected to the housing 41, thereby achieving an internal sealing of the case 4.

## Claims

1. A battery comprising:
one or more battery cells (1), wherein two opposite ends of each of the one or more battery cells (1) are provided with a first pole and a second pole, respectively;
a plurality of busbars comprising one or more first busbars (2) and one or more second busbars (3); and
a case (4) comprising a housing (41) and a first case cover (42), wherein the housing (41) comprises a body (411) and a partition plate (412) fixedly arranged, the partition plate (412) is located in the body (411), the partition plate (412) and the body (411) define a first cavity with an opening at an end of the first cavity, the one or more battery cells (1) are arranged in the first cavity, and one of the two opposite ends of the battery cell (1) abuts against the partition plate (412); the first case cover (42) is provided at first end of the housing (41) to close the first cavity;
wherein one or more support portions (421) are provided on a side of the first case cover (42) facing towards the one or more battery cells (1), the first busbar (2) is connected to the first pole, the support portion (421) abuts against the first busbar (2); the partition plate (412) is provided with one or more pole holes (4121), the second busbar (3) is located on a side of the partition plate (412) facing away from the battery cell (1), and the second pole passes through the pole hole (4121) and is connected to the second busbar (3).

2. The battery according to claim 1, wherein the partition plate (412) and the body (411) further define a second cavity (413) with an opening at an end of the second cavity (413), the second cavity (413) is independent of the first cavity; the case (4) further comprises a second case cover (43) disposed at a second end of the housing (41) to close the second cavity (413), and the second busbar (3) is located in the second cavity (413).

3. The battery according to claim 2, wherein the case (4) further comprises a separator (44) filled in the first cavity, the separator (44) is provided with one or more first accommodation chambers (441) therethrough, and the battery cell (1) is accommodated in the first accommodation chamber (441) and is compatible with the first accommodation chamber (441).

4. The battery according to claim 3, wherein a shape of the first case cover (42) is cap-shaped, and the first case cover (42) is provided with one or more second accommodation chambers (422) communicating with the one or more first accommodation chambers (441).

5. The battery according to claim 4, wherein the two opposite ends of the battery cell (1) are each provided with a first explosion-proof valve (12), the first explosion-proof valve (12) communicates with the second cavity (413) and the second accommodation chamber (422), respectively; the case (4) is further provided with a first channel (45) penetrating through the separator (44) and the partition plate (412), the first channel (45) is independent of the one or more first accommodation chambers (441), the second cavity (413) is communicated with the one or more second accommodation chambers (422) through the first channel (45), the case (4) is further provided with a second explosion-proof valve (47), and the second explosion-proof valve (47) communicates with the one or more second accommodation chambers (422).

6. The battery according to claim 5, wherein the case (4) is further provided with a second channel (46) comprising a first sub-section penetrating through a side wall of the body (411) and a second sub-section disposed in the separator (44), the first sub-section is in communication with the second sub-section, the second channel (46) is independent of the one or more first accommodation chambers (441) and the first channel (45);
the second sub-section is in communication with the one or more second accommodation chambers (422) and an outside of the battery; or the second sub-section is in communication with the second cavity (413) and the outside of the battery;
the second explosion-proof valve (47) is disposed on the body (411), and the second explosion-proof valve (47) is in communication with the first sub-section.

7. The battery according to claim 6, wherein the second channel (46) is located in a middle of the battery, and an extension direction of the second channel (46) is parallel to an axial direction of the battery cell (1).

8. The battery according to claim 1, wherein at least one of the following is satisfied:
the first busbar (2) is connected to the first pole, and the support portion (421) abuts against a junction of the first busbar (2) and the first pole;
the one or more second busbars (3) are integrally arranged on the partition plate (412);
the first busbar (2) is welded with the first pole; or
the second busbar (3) is welded with the second pole.

9. The battery according to claim 2, further comprising a battery management system module (5) disposed within the second cavity (413) and electrically connected to the one or more battery cells (1).

10. The battery according to claim 2, wherein the first case cover (42) extends into the first cavity, and a first sealant layer (6) is provided between the first case cover (42) and the body (411);
the second case cover (43) extends into the second cavity (413), and a second sealant layer (7) is disposed between the second case cover (43) and the body (411).

11. The battery according to claim 10, wherein a shape of the first case cover (42) is cap-shaped, an edge of the first case cover (42) is provided with a first projection (423) extending toward the body (411); the body (411), the first case cover (42) and the first projection (423) define a first accommodation groove, and the first sealant layer (6) is located in the first accommodation groove;
a shape of the second case cover (43) is cap-shaped, an edge of the second case cover (43) is provided with a second projection (431) extending toward the body (411); the body (411), the second case cover (43) and the second projection (431) define a second accommodation groove, and the second sealant layer (7) is located in the second accommodation groove.

12. The battery according to claim 3, wherein the body (411) is further provided with one or more first limiting portions (4111) located in the second cavity (413), and the second case cover (43) abuts against the one or more first limiting portions (4111); and/or
an edge of the first case cover (42) abuts against the separator (44).

13. The battery according to claim 12, wherein the one or more first limiting portions (4111) comprise a plurality of first limiting portions (4111), the plurality of first limiting portions (4111) are equally distributed around the second cavity (413).

14. A method for manufacturing a battery, comprising:
providing one or more battery cells (1), wherein two opposite ends of each of the one or more battery cells (1) are provided with a first pole and a second pole, respectively;
providing a housing (41), wherein the housing (41) comprises a body (411) and a partition plate (412) fixedly arranged, the partition plate (412) is located in the body (411), the partition plate (412) and the body (411) define a first cavity with an opening at an end of the first cavity, and one or more pole holes (4121) are formed in the partition plate (412);
disposing the one or more battery cells (1) in the first cavity, and penetrating the second pole into the pole hole (4121), wherein one of the two opposite ends of the battery cell (1) abuts against the partition plate (412);
providing one or more first busbars (2), and connecting the busbar to the first pole;
providing a first case cover (42), wherein one or more support portions (421) are provided on a surface of the first case cover (42);
providing the first case cover (42) at an end of the housing (41) to close the first cavity, wherein the support portion (421) abuts against the first busbar (2); and
providing one or more second busbars (3), fixing the one or more second busbars (3) to a side of the partition plate (412) facing away from the first cavity, and connecting the second busbar (3) to the second pole.

15. The manufacturing method of the battery according to claim 14, wherein the partition plate (412) and the body (411) further define a second cavity (413) with an opening at an end of the second cavity (413), the second cavity (413) is independent of the first cavity, wherein the method for manufacturing the battery further comprises:
providing a second case cover (43) and a battery management system module (5);
disposing the battery management system module (5) in the second cavity (413) and connecting the battery management system module (5) to the one or more battery cells (1); and
arranging the second case cover (43) at an other end of the housing (41) to close the second cavity (413).
